# EUROPEAN PATENT APPLICATION

(11) **EP 1 916 881 A2**
(43) Date of publication of application: **30.04.2008**
(21) Application number: 07110809.6
(22) Date of filing: 21.06.2007
(51) Int. Cl.: H05B 33/08

(54) **Circuit and method for driving light source**

(30) Priority: 26.10.2006 KR 20060104606
(71) Applicant: Samsung Electronics Co., Ltd., Yeongtong-gu Suwon-city, Gyeonggi-do 442-742 (KR)
(72) Inventor: Lee, Seung-yo 222-105,Hwanggol-Maeul 2danji Apartment, Suwon-si, Gyeonggi-do (KR)
(74) Representative: Robinson, Ian Michael

(57) **Abstract**

A circuit and a method for driving a light source (240) are provided. The circuit for driving a light source (240) according to exemplary embodiments of the present invention includes a converting unit (210) which supplies an electric current required for driving a light source (240) and a converter controller (220) which detects the current output from the converting unit (210) and compares the detected current to a reference current to control the current of the converting unit (210) based on the comparison result. Also included are a light source driver (230) which receives the controlled current from the converting unit (210) and converts the current into a pulse current to drive a light source (240) and a pulse signal generator (250) which generates a pulse signal to be applied to the light source driver (230). The exemplary embodiments of the present invention provide a circuit and a method for driving a light source (240), in which an electric current having a size controlled by a converting unit (210) is supplied to a light source driver (230), and the light source driver (230) converts the supplied current into a pulse current to drive the light source (240), so that the rising time of the current is decreased.

## Description

The present invention relates to a circuit and a method for driving a light source. More particularly, the present invention relates to a circuit and a method for driving a light source, in which an electric current whose size is controlled by a converting unit is supplied to a light source driver, and the light source driver converts the supplied current into a pulse current to drive the light source, so that the light source can be efficiently driven.

Laser diodes or light-emitting diodes (LEDs) are typically small in size, can be used for long periods of time, and directly convert electric energy into light energy. In particular, not only lamp type light sources which were originally used, but also laser diodes or LEDs have recently been adopted as light sources in display devices such as digital light processing (DLP) projectors or televisions (TVs). In order to increase the efficiency of the above light sources, a pulse-type high frequency large current is required.

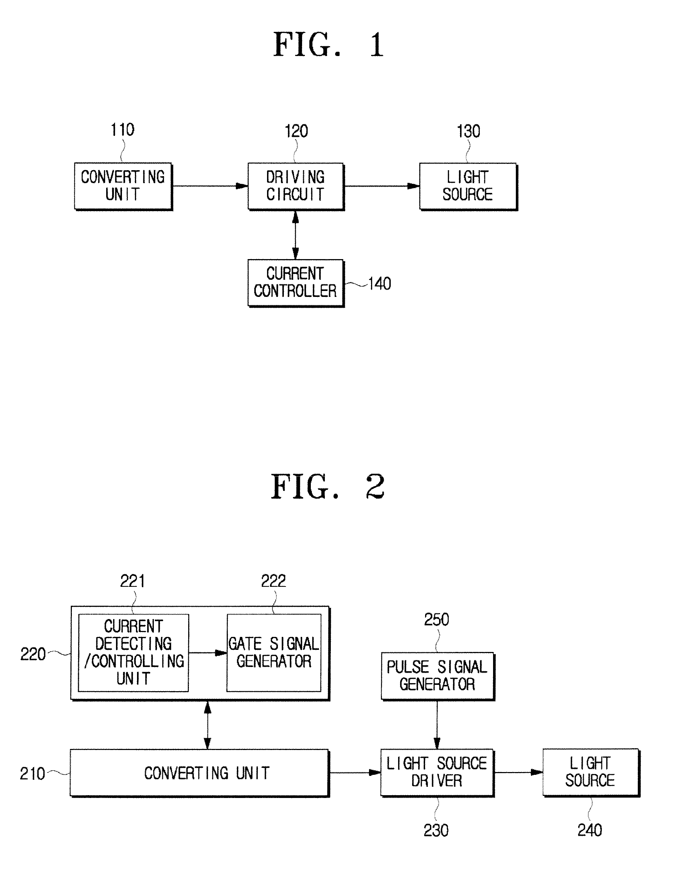

Figure 1 illustrates a conventional light source driving circuit. A converting unit 110 of the conventional light source driving circuit converts an input direct current (DC) voltage into a predetermined DC voltage. A driving circuit 120 receives the DC voltage converted by the converting unit 110 to drive a light source 130. A current controller 140 detects the electric current from the driving circuit and compares the current to a predetermined reference current. If there is a difference between the current from the driving circuit and the reference current, the current controller 140 generates a control signal to control the driving circuit 120 to compensate the current of the driving circuit.

However, when the current controller 140 detects the electric current from the driving circuit, the resistor for detecting the electric current is used on one side of the driving circuit 120. Accordingly, when a large current flows into the light source, that is, a load, a large amount of heat is wasted and the cost of generating heat increases. Additionally, since most existing driving circuits are used when the electric current is small, it is inappropriate to use the existing driving circuits when a large current (typically, several tens of amperes A) is alternated to be a pulse-type high frequency. If the length of wires for connecting laser diodes or LEDs increases, it is difficult to reduce the current rising time, in which currents are alternated to a pulse type, due to inductance components generated by connection wires. Additionally, the larger the size of the current, the longer the current rising time.

Accordingly, there is a need for an improved circuit and method for driving a light source so that a pulse-type current can have a short rising time when the current is large and inductance components generated by connecting wires to the circuit exist.

According to the present invention there is provided an apparatus and method as set forth in the appended claims. Preferred features of the invention will be apparent from the dependent claims, and the description which follows.

An aspect of exemplary embodiments of the present invention is to address at least the above problems and/or disadvantages and provide at least the advantages described below. Accordingly, an aspect of exemplary embodiments of the present invention is to provide a circuit and a method for driving a light source, in which an electric current whose size is controlled by a converting unit is supplied to a light source driver, and the light source driver converts the supplied current into a pulse current to drive the light source, so that a pulse-type current can have a short rising time even when the current is large and inductance components generated by connecting wires to the circuit exist.

The foregoing and other objects and advantages are substantially realized by providing a circuit for driving a light source. The circuit comprises a converting unit, a converter controller, a light source driver and a pulse signal generator. The converting unit supplies an electric current required for driving a light source. The converter controller detects the current output from the converting unit and compares the detected current to a reference current to control the current of the converting unit based on the comparison result. The light source driver receives the controlled current from the converting unit and converts the current into a pulse current to drive a light source. The pulse signal generator generates a pulse signal to be applied to the light source driver.

The light source driver may comprise at least two switches, and the pulse current may be generated by alternately turning the switches on and off.

The pulse signal generated by the pulse signal generator may control the operation of alternately turning the switches on and off.

The converter controller may comprise a current detecting/controlling unit and a gate signal generator. The current detecting/controlling unit detects the current of the converting unit and compares the detected current to the reference current to control the current of the converting unit. The gate signal generator generates a gate signal to be applied to the converting unit.

The reference current may vary according to the amount of current required for driving the light source.

The converting unit may comprise one or more DC-DC converters.

The current of the converting unit may be detected by one converter from among the one or more DC-DC converters.

According to another aspect of exemplary embodiments of the present invention, a method for driving a light source is provided. An electric current of a converting unit is detected. The detected current is compared to a reference current so that the current of the converting unit may be controlled based on the comparison result. A pulse signal is generated and the controlled current is converted into a pulse current according to the pulse signal.

Other objects, advantages and salient features of the invention will become apparent to those skilled in the art from the following detailed description, which, taken in conjunction with the annexed drawings, discloses exemplary embodiments of the invention.

The above and other exemplary objects, features and advantages of certain exemplary embodiments of the present invention will be more apparent from the following description taken in conjunction with the accompanying drawings, in which:
Figure 1 is a schematic illustration of the configuration of a conventional light source driving circuit;
Figure 2 is a schematic illustration of the configuration of a light source driving circuit according to an exemplary embodiment of the present invention;
Figure 3 is a detailed circuit view illustrating the configuration of a light source driving circuit according to an exemplary embodiment of the present invention;
Figures 4A and 4B illustrate a phase of an electric current, which is generated from a converting unit, for each converter according to an exemplary embodiment of the present invention;
Figure 5 is an illustration of a waveform of a pulse signal generated by a pulse signal generator according to an exemplary embodiment of the present invention;
Figure 6 illustrates a waveform of a pulse current generated by a light source driver according to an exemplary embodiment of the present invention; and
Figure 7 is a flowchart illustrating the operation of driving a light source according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

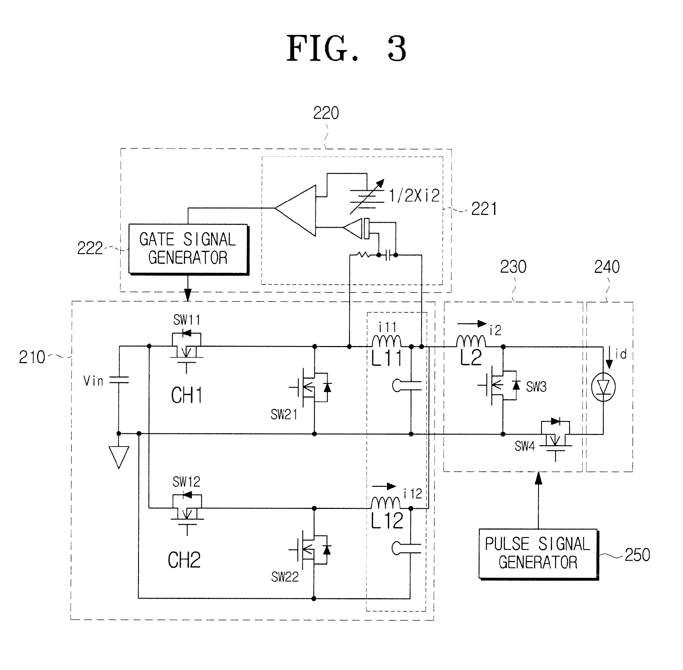

Figure 2 is a schematic illustration of a light source driving circuit according to an exemplary embodiment of the present invention.

The light source driving circuit, according to an exemplary embodiment of the present invention, comprises a converting unit 210, a converter controller 220, a light source driver 230, a light source 240, and a pulse signal generator 250. Additionally, the converter controller 220 comprises a current detecting/controlling unit 221, and a gate signal generator 222.

The converting unit 210 controls an electric current to adjust the size of an electric current to be flown into a load. The converting unit 210 comprises one or more DC-DC converters. For example, if the size of the current is large, the converting unit may comprise a multi-channel converter in which several converters are connected in parallel. The current size of the converting unit is determined according to the current amount required by the light source 240.

The current detecting/controlling unit 221 compares an electric current detected from the converting unit 210 to a reference current, and controls the current of the converting unit based on the comparison result. The gate signal generator 222 generates a gate signal to control the current flowing into the converting unit 210. Additionally, the reference current may vary according to the amount of current required for driving the light source 240 in the light source driver 230.

The light source driver 230 receives the current controlled by the current detecting/controlling unit 221, and converts the current into a pulse current to drive the light source 240. According to an exemplary implementation, the light source 240 may be at least one laser diode or light emitting diode.

The light source driver 230 easily alternates the current to a pulse-type high frequency current that has a short current rising time which is efficient for driving the light source 240 even in the case of a large current.

The pulse signal generator 250 generates a pulse signal which is needed to generate a pulse current for driving the light source 240. This pulse signal is applied to the light source driver 230 to convert the current into a pulse waveform.

Figure 3 is a detailed circuit view illustrating the light source driving circuit according to an exemplary embodiment of the present invention.

The converting unit 210 may comprise the DC-DC converter which has several channels, and adjust the amount of current by controlling an electric current to suit the size of the current required at the load. Each converter of the converting unit 210 comprises switches. Each switch controls electric currents i11 and i12 which are timing-controlled and output.

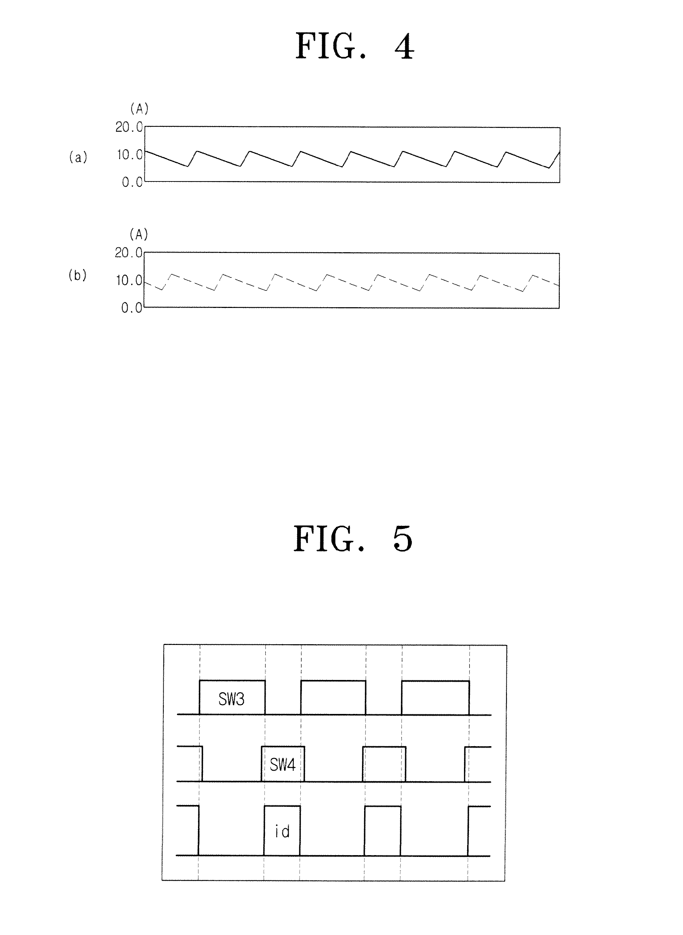

The converters forming the converting unit 210 may be configured so that electric currents with a phase difference are output from each converter. As illustrated in Figure 3, the converting unit 210 comprises two converters CH1 and CH2, and each converter is operated so that an electric current, which is controlled by the switch and is output, has a phase difference of approximately 180° with an electric current output from the other converter. Figures 4A and 4B illustrate current waveforms of converter inductors L11 and L12, and here, the currents are output from each converter. It can be shown that a current waveform (referring to Figure 4B) of the converter CH2 is formed by converting the phase of a current waveform (referring to Figure 4A) of the converter CH1 by approximately 180°. In order to increase the efficiency of the converting unit 210, the converting unit 210 comprises several converters, as described above. Additionally, only one converter out of the converters forming the converting unit 210 may be used according to the current amount required by the light source 240. Furthermore, the converting unit 210 may consist of a single converter.

The converting unit 210 receives a gate signal from the converter controller 220 to drive each of the switches SW11 to SW22. Accordingly, the switches SW11 to SW22 are individually controlled according to the gate signal. Therefore, it is possible to control the size of the current output from the converting unit 210.

The converter controller 220 illustrated in Figure 3 detects an electric current with respect to one converter out of the converters of the converting unit 210. The converter controller 220 comprises the current detecting/controlling unit 221, and the gate signal generator 222.

The current detecting/controlling unit 221 detects an electric current of the converter inductor L11 or L12 with respect to one converter, and compares the detected current to the predetermined reference current to control the detected current. The gate signal generator 222 generates a gate signal for driving a switch of the converter. When the current is detected for one converter by the current detecting/controlling unit 221, the number of current detection circuits may be reduced when the multi-channel converter is formed. Thus, a value, which is obtained by dividing the current amount required by the light source 240 by the number of channels, is used as a reference current value. If the converting unit 210 comprises several converters, the current divided by the number of converters flows into each converter in the converting unit 210 even when a large current flows into the light source 240. Therefore, the current flowing into each converter is smaller than the current flowing into the light source 240.

The gate signal generator 222 generates a gate signal to respectively control the switches SW11 to SW22 of the converting unit 210 so the difference obtained comparing the current detected by the current detecting/controlling unit 221 to the reference current is compensated. The gate signal is then applied to the switches SW11 to SW22.

Additionally, the reference current of the converter controller 220 changes according to the current amount required by the light source 240. For example, when a current of 30 A is required by the light source 240, a reference current will be 15 A if the converting unit 210 uses two converters as illustrated in Figure 3. This may vary according to the amount of current required by the light source 240.

As described above, the current required by the light source 240 is controlled and supplied by the converting unit 210. Accordingly, it is not necessary to compensate or control the detected current in the light source driver 230 to supply a constant current in the manner used in the conventional art.

The light source driver 230 receives the current output from the converting unit 210 to convert the output current into a pulse current. The light source driver 230 comprises two switches SW3 and SW4 to generate a pulse-type high frequency current. The number of switches may increase by connecting switches in parallel according to the current amount. The switches SW3 and SW4 are alternately turned on and off to generate a pulse current.

The pulse signal generator 250 generates a pulse signal to be applied to the switches SW3 and SW4.

Figure 5 illustrates the pulse signal generated by the pulse signal generator 250, and the pulse signal is applied to the switches SW3 and SW4 of the light source driver 230. In Figure 5, the switch SW3 turns on and the switch SW4 then turns off, whereas, the switch SW3 turns off after the switch SW4 turns on. Additionally, a current id flows into the light source while the switch SW4 is on. Accordingly, the switches SW3 and SW4 of the light source driver 230 are alternately turned on and off according to the pulse signal of Figure 5, so that the current output from the converting unit 210 can be converted into a pulse-type current.

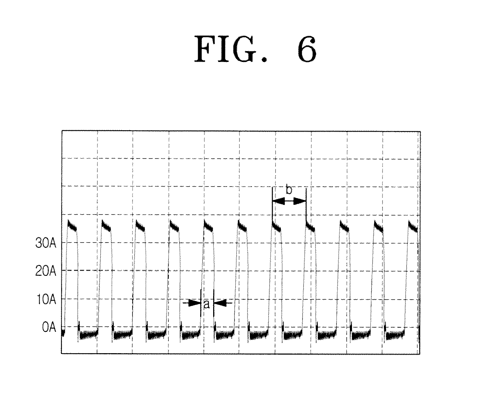

Figure 6 illustrates the waveform of the pulse current generated by alternately turning the switches SW3 and SW4 of the light source driver 230 on and off. In Figure 6, the generated current is a large pulse-type current with a pulse width a of 3.7 usec that has a peak value at the current of 35 A and a high frequency b of 9.48 usec (105.46 kHz). According to an exemplary implementation, the peak value, frequency and duty value of the current may be optionally adjusted by converting signals of the current detecting/controlling unit 221 and pulse signal generator 250.

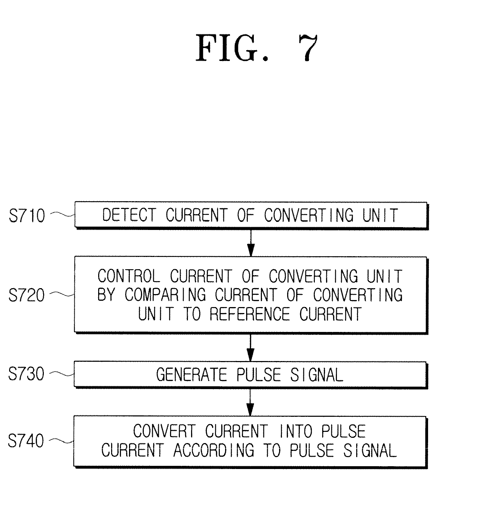

Figure 7 is a flowchart illustrating the process of driving a light source according to an exemplary embodiment of the present invention. An electric current of the converting unit 210 is first detected in step S710. Next, the converter controller 220 compares the current output from the converting unit 210 to a reference current to control the current of the converting unit 210 based on the comparison result in step S720. The reference current varies according to the amount of current required for driving the light source.

Subsequently, the pulse signal generator 250 generates a pulse signal in step S730. The generated pulse signal is applied to the switches to control the operation of alternately turning the switches SW3 and SW4 of the light source driver 230 on and off. The current controlled by the converter controller 220 is converted into the pulse current according to the pulse signal, to drive the light source in step S740. The pulse current is generated by alternately turning the switches SW3 and SW4 of the light source driver 230 on and off.

The respective constituent elements can be modified in order to achieve the same aspects in the configuration of the circuit according to the exemplary embodiments of the present invention.

The exemplary embodiments of the present invention provide a circuit and a method for driving a light source, in which an electric current with a size controlled by a converting unit is supplied to a light source driver, and the light source driver converts the supplied current into a pulse current to drive the light source, so that the light source can be efficiently driven.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A circuit for driving a light source (240), comprising:
a converting unit (210) for supplying an electric current required for driving a light source (240);
a converter controller (220) for detecting the current output from the converting unit (210) and for comparing the detected current to a reference current to control the current of the converting unit (210) based on the comparison result;
a light source driver (230) for receiving the controlled current from the converting unit (210) and for converting the current into a pulse current to drive a light source (240); and
a pulse signal generator (250) for generating a pulse signal to be applied to the light source driver (230).

2. The circuit as claimed in claim 1, wherein the light source driver (230) comprises at least two switches, and the pulse current is generated by alternately turning the switches on and off.

3. The circuit as claimed in claim 2, wherein the pulse signal generated by the pulse signal generator (250) controls the operation of alternately turning the switches on and off.

4. The circuit as claimed in claim 1, wherein the converter controller (220) comprises:
a current detecting/controlling unit (221) for detecting the current of the converting unit (210) and for comparing the detected current to the reference current to control the current of the converting unit (210); and
a gate signal generator (222) for generating a gate signal to be applied to the converting unit (210).

5. The circuit as claimed in claim 4, wherein the reference current varies according to the amount of current required for driving the light source (240).

6. The circuit as claimed in claim 1, wherein the converting unit (210) comprises at least one DC-DC converter.

7. The circuit as claimed in claim 6, wherein the current of the converting unit (210) is detected by one converter from among the at least one DC-DC converter.

8. A method for driving a light source (240), comprising:
detecting an electric current of a converting unit (210);
comparing the detected current to a reference current to control the current of the converting unit (210) based on the comparison result;
generating a pulse signal; and
converting the controlled current into a pulse current according to the pulse signal.

9. The method as claimed in claim 8, wherein the pulse current is generated by alternately turning at least two switches of a light source driver (230) on and off.

10. The method as claimed in claim 9, wherein the pulse signal controls the operation of alternately turning the switches on and off.

11. The method as claimed in claim 8, wherein the reference current varies according to the amount of current required for driving the light source (240).

12. The method as claimed in claim 8, wherein detecting the electric current of the converting unit (210) comprises detecting an electric current from one converter from among the at least one DC-DC converter forming the converting unit (210).
